# EUROPÄISCHE PATENTSCHRIFT

(11) **EP 0 855 515 B1**
(45) Veröffentlichungstag und Bekanntmachung des Hinweises auf die Patenterteilung: **18.12.2002**
(21) Anmeldenummer: 97120038.1
(22) Anmeldetag: 15.11.1997
(51) Int. Cl.: F04D 13/02, H02K 49/10

(54) **Regelbare Kühlmittelpumpe für Kraftfahrzeuge**
Adjustable coolant pump for motor vehicles
Pompe de refroidissement réglable pour véhicules

(30) Priorität: 22.01.1997 DE 19702000; 21.10.1997 DE 19746359
(43) Veröffentlichungstag der Anmeldung: 29.07.1998
(73) Patentinhaber: Schmidt, Eugen, Dr., 98673 Merbelsrod (DE)
(72) Erfinder: Schmidt, Eugen, Dr., 98673 Merbelsrod (DE)

(56) Entgegenhaltungen:
- DE-A- 1 528 446
- DE-A- 2 920 706
- DE-A- 4 121 240
- FR-A- 1 339 539
- FR-A- 2 087 350
- FR-A- 2 087 825
- US-A- 3 649 137
- US-A- 5 575 630

## Beschreibung

Die Erfindung betrifft eine regelbare Kühlmittelpumpe für Kraftfahrzeuge, welche über eine Riemenscheibe direkt vom Verbrennungsmotor angetrieben wird.

Im Stand der Technik werden direkt vom Verbrennungsmotor über eine Riemenscheibe angetriebene, regelbare Kühlmittelpumpe für Kraftfahrzeuge vorbeschrieben.

Bei in der US 3 649 137, der DE 15 28 446 auch der FR 2 087 825 (DE 197 46 359) Induktionskupplungen (Wirbelstromkupplungen) vorbeschrieben, bei denen zur Induktion von Wirbelströmen Kupfer in an sich bekannter Weise mit Weicheisen kombiniert wird.

Für Wirbelstromkupplung ist stets charakteristisch, daß beim Vorliegen einer Differenzdrehzahl der Magnetscheibe gegenüber der Leiterscheibe die Wirbelströme erzeugt, und dadurch das Magnetfeld aufgebaut wird.

Dieses Magnetfeld tritt dann mit dem Magnetfeld des Permanentmagneten in Wechselwirkung und führt so zur Mitnahme der der angetriebenen Kupplungshälfte gegenüberliegenden Kupplungshälfte.

Mit Wirbelstromkupplungen können jedoch bei niedrigen Motordrehzahlen keine, oder mit antriebsseitig hohen Übersetzungen nur geringe Kühlmittelmengen gefördert werden.

In Kraftfahrzeugen werden jedoch gerade bei niedrigen Kühlmitteltemperaturen häufig höhere Kühlmittelumlaufmengen benötigt.

Die Regelung der in der FR 2 087 825 vorbeschriebenen Kühlmittelpumpe wird über die Variation des Arbeitsspaltes mittels einer mit dem Kühlwasser in gut wärmeleitendem Kontakt stehenden, als Thermowachselement bekannten, thermische Verschiebevorrichtung realisiert.

Dadurch kann mit der in der FR 2 087 825 vorbeschriebenen Anordnung der Arbeitsspalt bis zum Erreichen der Betriebstemperatur verändert werden.

Eine weitere Variation des Arbeitsspaltes ist erst nach Abkühlung der Motortemperatur wieder möglich.

In der DE OS 37 06 970 wird eine nicht regelbare Wasserpumpe mit einem über eine Hystersekupplung angetriebenen Pumpenflügelrad vorgestellt.

Für eine Hysteresekupplung ist deren nahezu konstanter Drehmomenten - Drehzahl - Verlauf charakteristisch.

Der Erfindung liegt daher die Aufgabe zugrunde eine Pumpe, insbesondere eine Kühlmittelpumpe für Kraftfahrzeuge zu entwickeln welche die vorgenannten Nachteile nicht aufweist, insbesondere direkt, beispielsweise über einen Riementrieb, von der Kurbelwelle des Verbrennungsmotors angetrieben wird, keine Wellendichtung zur Abdichtung des Strömungsraumes gegenüber dem Lagergehäuse der Antriebsriemenscheibe benötigt, sich durch eine hohe Betriebssicherheit und Zuverlässigkeit sowie einen minimalen Fertigungs- und Montageaufwand auszeichnet und im gesamten Arbeitsbereich des Motors sowohl die Abgasemission wie auch den Kraftstoffverbrauch deutlich reduziert.

Erfindungsgemäß wird diese Aufgabe durch eine Vorrichtung nach den Merkmalen des Anspruches 1 gelöst.

Diese erfindungsgemäße Lösung zeichnet sich insbesondere dadurch aus, daß dem Hysteresewerkstoff der "zweiten Kupplungshälfte" ein oder beidseitig benachbart Kupfermaterial angeordnet ist.

Auf Grund dieser erfindungsgemäßen Anordnung wird erreicht, daß auf der Abtriebsseite schon bereits bei kleinen Relativdrehzahlen beginnend, Drehmomente bis zu einem im gesamten Drehzahlbereich konstant bleibenden maximalen Drehmoment auf das Flügelrad übertragen werden können.

Die umlaufenden Segmente des Magnetringes erzeugen im Kupfermaterial Spannungen, die Wirbelströme zur Folge haben.

Der erfindungsgemäß hinter, vor oder zwischen dem Kupfermaterial angeordnete Hysteresewerkstoff (z.B. AlNiCo) dient dem magnetischen Rückschluß und verstärkt so das von diesen Wirbelströmen in der Kupferscheibe aufgebaute Magnetfeld.

Aufgrund dieser erfindungsgemäß, neuartigen Anordnung wird eine für herkömmliche Hysterese- oder Wirbelstromkupplung ungewöhnliche Übertragungscharkteristik erzielt.

Mittels der neuartigen erfindungsgemäßen Anordnung werden die Vorteile des schlupffreien Arbeitsbereiches der Hysteresekupplung zum Antrieb einer Kühlmittelpumpe im unteren Drehzahlbereich mit den Vorteilen eines hohen Übertragungsmomentes einer Wirbelstromkupplung im oberen Drehzahlbereich vereint.

Dabei ermöglicht die erfindungsgemäße, lastabhängige Variation des Luftspaltes, daß die erfindungsgemäße Lösung selbst den hohen Erfordernissen einer optimalen Übertagung von hohen Antriebsleistungen bei direkt angetriebenen Kraftfahrzeugkühlmittelpumpen gerecht wird.

Die erfindungsgemäße Lösung hat zudem gleichzeitig eine Drehmomentübertragung zur Folge welche zu einer deutlichen Verbesserung des Kavitationsverhaltens Kühlmittelpumpe führt.

Dabei bewirkt die erfindungsgemäße Anordnung, daß beispielsweise bei konstant gehaltenem Luftspalt, infolge der erfindungsgemäßen, dem Hysteresematerial benachbarten Anordnung von Kupfermaterial ein dem konstanten Drehzahl - Drehmomenten - Verlauf der Hysteresekupplung überlagerter, drehzahlabhängig ansteigender Drehmomentenverlauf erzielt wird, so daß bereits bei konstant gehaltenem Luftspalt, schon bei kleinen Relativdrehzahlen beginnend, ein relativ hohes und mit zunehmender Relativdrehzahl ein noch ansteigendes Drehmoment auf das Flügelrad übertragen werden kann.

Das auf das Flügelrad mit der erfindungsgemäßen Kupplung übertragbare Drehmoment steigt zunächst linear mit der Drehzahl an.

Bei höheren Relativdrehzahlen nimmt jedoch der Anstieg des übertragbaren Drehmomentes in Verbindung mit einer zunehmenden Erwärmung der Kupplungsscheiben wieder ab.

Daher ist es vorteilhaft im Bereich der mit der Antriebswelle verbundenen Kupplungshälfte ein ebenfalls mit der Antriebswelle verbundenes Lüfterrad anzuordnen, welches in Verbindung mit den am Lagergehäuse angeordneten Lüftungsschlitzen die Kupplungsscheiben gezielt kühlt, dabei die Schlupfwärme abführt, und somit eine Erhöhung des maximal übertragbaren Drehmomentes bewirkt.

Mit Hilfe der erfindungsgemäß möglichen Variation des Luftspaltes zwischen den beiden Kupplungshälften kann darüber hinaus die momentane Drehzahl der Pumpe und somit deren Förderleistung mittels der im Stand der Technik angebotenen Regeltechnik in Abhängigkeit vom jeweiligen Betriebszustand des Verbrennungsmotors stufenlos variiert werden.

Die Trennung des Lagergehäuseraumes mittels einer nichtmagnetischen Trennwand dient einer optimalen, robusten und zuverlässigen Abdichtung des Stömungsraumes gegenüber der Antriebsseite der Wasserpumpe bei minimalem Fertigungs- und Montageaufwand.

Infolge des direkten Antrieb einer der Kupplungshälften der erfindungsgemäßen Kupplung wird eine der Motordrehzahl stets proportionale Antriebsdrehzahl gewährleistet.

Dabei ist es vorteilhaft, wenn auf der Antriebswelle, auf einer Seite des im Lagergehäuse der Kühlmittelpumpe gelagerten Pumpenlagers, drehfest die Riemenscheibe der Kühlmittelpumpe angeordnet ist.

Auf der anderen Seite des Pumpenlagers ist auf dem dort angeordneten Bereich der Antriebswelle, der Kupplungswelle, mittels einer axial verschiebbaren Welle - Nabe - Verbindung, beispielsweise auf einer als Keil- oder Zahnwelle ausgebildeten Kupplungswelle, eine der beiden Kupplungshälften der dauermagnetischen Kupplung angeordnet.

Somit ist es möglich die Spaltweite des zwischen den beiden Kupplungshälften angeordneten Luftspaltes in Abhängigkeit vom jeweiligen Betriebszustand des Motors zu variieren.

So ist es mittels der erfindungsgemäßen Lösung mit einfachen und kostengünstigen technischen Mitteln bei minimalem Fertigungs- und Montageaufwand und bei hoher Betriebssicherheit und Zuverlässigkeit möglich, durch ein definiertes, stufenloses Verändern des zwischen den beiden Kupplungshälften angeordneten Luftspaltes bei jeder beliebigen Antriebsdrehzahl der Kühlmittelpumpe , beispielsweise von Seiten des Motormanagementes, eine stetige Beeinflussung der Förderleistung zu erzielen, so daß stets nur die jeweils momentan vom Motor benötigte Kühlmittelfördermenge gezielt bereitgestellt wird.

Vorteilhaft ist es auch, wenn am Lagergehäuse ein Sensor zur Erfassung der jeweiligen Drehzahl des Flügelrades und eine Verstelleinheit zur Veränderung des zwischen den Kupplungshälften befindlichen Luftspaltes angeordnet sind.

Dieser Sensor, beispielsweise ein Hallsensor, ist vorzugsweise "luftseitig" im Lagergehäuse angeordnet.

Selbstverständlich kann der Sensor auch "wasserseitig" installiert sein.

Die "luftseitige" Anordnung des Sensors hat jedoch den Vorteil, daß eine Abdichtung des Sensors und / oder seiner Zuleitungen nicht erforderlich ist und somit generell "Undichtheiten" vermieden werden können.

Durch die Erfassung der Drehzahl des Flügelrades mittels eines Sensors ist es über die Mototronik des Verbrennungsmotors in Verbindung mit der über die Verstelleinheit gegebene Regelbarkeit der erfindungsgemäßen Kühlmittelpumpe möglich, daß durch das Verschieben einer Kupplungshälfte der Luftspalt definiert so verändert werden kann, daß infolge einer Veränderung des Übertragungsmomentes der Kupplung eine Veränderung der Flügelraddrehzahl erreicht wird, so daß dadurch der Volumenstrom nach Bedarf geregelt werden kann.

Mittels der erfindungsgemäßen Lösung kann so beispielsweise bei sich permanent ändernder Motordrehzahl ein konstant bleibender Volumenstrom des Kühlmittels realisiert werden.

Bei Bedarf ist es mit speziellen Varianten der erfindungsgemäßen Lösung auch möglich, beispielsweise in der Warmlaufphase des Motors, durch die Einstellung eines maximal möglichen Spaltes selbst einen Stillstand des Flügelrades zu realisieren.

Auf Grund der mittels die erfindungsgemäße Lösung möglichen Variation der Fördermenge der Kühlmittelpumpe im gesamten Drehzahlbereich der Kurbelwelle kann stets die Förderleistung der Pumpe dem jeweiligen Betriebszustand des Motors kontinuierlich angepaßt werden, so daß die von der Kühlmittelpumpe dem Gesamtsystem entnommene Antriebsleistung wesentlich reduziert, und dadurch der zum Antrieb der Kühlmittelpumpe verwendeten Kraftstoffanteil gesenkt wird.

Gleichzeitig kann in der Warmlaufphase des Motors die Fördermenge der Wasserpumpe minimiert und so der Zeitraum der Warmlaufphase des Motors wesentlich verkürzt werden.

Dies führt dann neben einer deutlichen Reduzierung der Abgasemission in der Warmlaufphase gleichzeitig zu einer damit verbundenen deutlichen Reduzierung des Kraftstoffverbrauches.

Vorteilhaft ist es auch, wenn die nichtmagnetische Trennwand, der Deckel, insbesondere bei höheren Antriebsleistungen mittels eines Axiallagers gegen die Antriebswelle abgestützt wird.

So werden beispielsweise Funktionsstörungen welche aus einer unkontrollierten Spaltänderungen resultieren könnten vermieden.

Gleichzeitig wird dadurch stets die Zuverlässigkeit der Pumpe selbst bei höchster Leistungsübertragung voll gewährleistet.

In oder an der nichtmagnetischen Trennwand, dem Deckel, kann in speziellen Ausführungsformen der erfindungsgemäßen Lösung ein Lagerzapfen mit Anlaufbund angeordnet sein, auf dem das mittels einer Gleitlagerbuchse drehbar gelagerte Flügelrad mit den zugehörigen Kupplungsbaugruppen gegen axiale Verschiebungen gesichert ist, wobei sich im Bereich des freien Endes des Lagerzapfens ein Sicherungsring befindet, und zwischen diesem Sicherungsring und beispielsweise der Gleitlagerbuchse des Flügelrades eine Anlaufscheibe angeordnet ist.

Auf Grund dieser speziellen Ausführungsform der erfindungsgemäßen Lösung wird selbst bei einer sehr großen Beabstandung der beiden Kupplungshälften, welche beispielsweise zum Stillstand des Flügelrades bei laufendem Motor führen könnte, eine nicht beabsichtigte weitere Vergrößerung des Luftspaltes vermieden, so daß jederzeit ein definiertes "Wiedereinkuppeln" gewährleistet ist.

Vorteilhaft ist es auch, wenn in der nichtmagnetischen Trennwand, dem Deckel, eine Gleitlagerbuchse angeordnet ist, in welcher das Gegenlager mit dem Flügelrad und den jeweils zugehörigen Kupplungsbaugruppen axial und radial gelagert ist.

Vorzugsweise ist diese Gleitlagerbuchse in einer mittig im Deckel eingeformten Lageraufnahmebuchse eingebracht.

Diese einseitige Lagerung des Flügelrades in der Gleitlagerbuchse wird durch die spezielle Anordnung des Lagers im Kraftwirkungsbereich der dauermagnetischen Kupplung möglich.

Auf Grund dieser Anordnung kann die Magnetkraft der erfindungsgemäß eingesetzten Kupplung gleichzeitig der Erzeugung der erforderlichen "Lagerhaltekraft" und somit auch gleichzeitig zur Lagesicherung des Flügelrades, mit all den an diesem angeordneten Baugruppen, in der Gleitlagerbuchse genutzt werden.

Infolge dieser Lösung werden bei speziellen Einsatzfällen, insbesondere bei solchen mit kleineren Antriebsleistungen, aufwendige zusätzliche Konstruktionen zur Erzeugung der für den Betriebszustand des Gleitlagers erforderlichen Lagerhaltekraft vermieden.

Dabei dient die erfindungsgemäß in den Deckel eingeformte Lageraufnahmebuchse, in Verbindung mit der dort angeordneten Gleitlagerbuchse, gleichzeitig der Stabilisierung der gesamten Deckelgeometrie bei minimierter Deckelwandstärke.

Darüber hinaus gewährleistet die Anordnung der Gleitlagerbuchse eine sichere Übertragung der Lagerbelastungen auf das Lagergehäuse.

Auf Grund einer solchen erfindungsgemäßen Ausbildung der Lagerstelle im Strömungsraum des Zylinderkurbelgehäuses wird eine optimale Umströmung des Gleitlagers mit Kühlflüssigkeit gewährleistet, der Verschleiß minimiert und die Zuverlässigkeit der gesamten Lagerbaugruppe deutlich erhöht.

Da bei höheren Relativdrehzahlen der Anstieg des übertragenen Drehmomentes mit der zunehmenden Erwärmung des Magneten abnimmt, ist es vorteilhaft, den Dauermagneten zwischen dem Gegenlager und dem Flügelrad im Kühlmittel anzuordnen.

Dies hat den Vorteil, daß selbst bei steigender Relativdrehzahl die dabei zunehmende Erwärmung des Magneten auf Grund des diesen umströmenden Kühlmittels minimiert wird.

Infolge einer solchen stetigen Kühlung des Magneten kann das übertragbare Drehmoment selbst bei höheren Relativdrehzahlen nahezu konstant gehalten, und das maximal übertragbare Drehmoment wie auch die maximal geförderte Flüssigkeitsmenge der Kühlmittelpumpe deutlich verbessert werden.

Vorteilhaft ist es auch, wenn bei speziellen Bauformen der erfindungsgemäßen Lösung nahe der nichtmagnetischen Trennwand am drehbar gelagerten, mit den zugehörigen Kupplungsbaugruppen verbundenen Flügelrad ein der Kupplungswelle der Antriebsseite gegenüberliegender Axialmagnet angeordnet ist. Dieser zentrisch, der Antriebswelle gegenüberliegend angeordnete Axialmagnet bewirkt bei Einsatz der zuvor beschriebenen Gleitlagerbuchse, daß selbst bei einer sehr große Beabstandung der beiden Kupplungshälften, welche gegebenenfalls zum Stillstand des Flügelrades bei laufendem Motor führen könnte, infolge der erfindungsgemäßen Anordnung des Axialmagneten eine nicht beabsichtigte weitere Vergrößerung des Luftspaltes vermieden wird, so daß ein definiertes "Wiedereinkuppeln" jederzeit gewährleistet ist.

Vorteilhaft ist weiterhin, wenn die beiden einander gegenüberliegenden, voneinander beabstandet angeordneten, wirksamen Kupplungsoberflächen in ihren Oberflächenformen zueinander komplementär, in den unterschiedlich möglichen Bauformen der Kupplung jedoch als beliebige rotationssymmetrische Körper, beispielsweise als Paraboloid, Kegelmantel, Zylindermantel oder aber auch in der Form einer Kreisscheibe, wie aber auch als Kombinationen der vorgenannten Oberflächenformen ausgebildet sind.

Mittels der gezielten Auswahl spezieller geometrischer Bauformen erfolgt in Abhängigkeit von der jeweils erforderlichen Übertragungsleistung eine Optimierung der Kupplungsbaugröße zur effektiven Übertragung der Axial - und Radialkräfte der Kupplung.

Ein weiterer Vorteil der erfindungsgemäßen Lösung besteht nun darin, daß speziell für den unteren Drehzahlbereich auf Grund der erfindungsgemäßen Regelbarkeit der Flügelraddrehzahl das Flügelrad bewußt "überdimensioniert" werden kann, da infolge der erfindungsgemäßen Lösung im Dauerbetrieb keine aus einer solchen Überdimensionierung resultierenden negativen Auswirkungen zu befürchten sind.

All diese vorteilhaften Wirkungen können mittels einer optimalen bedarfsorientierten Steuerung der erfindungsgemäße Kühlmittelpumpe seitens des Motormanagements noch verstärkt werden, so daß der erfindungsgemäßen Kühlmittelpumpe stets nur so viel Leistung zugeführt wird, wie diese auch tatsächlich zur Erzeugung des für die Kühlung erforderlichen Kühlmittelumlaufes benötigt, so daß der Einsatz der erfindungsgemäßen Kühlmittelpumpe neben den bereist erwähnten Vorteilen auch zu einer Leistungseinsparung und gleichzeitig damit zu einer weiteren aus dieser Leistungseinsparung resultierenden Kraftstoffeinsparung führt.

Nachfolgend soll nun die erfindungsgemäße Lösung an Hand eines Ausführungsbeispieles näher erläutert werden.

Eine der möglichen Bauformen der erfindungsgemäßen, regelbaren Kühlmittelpumpe ist in der Zeichnung dargestellt.

In einem Lagergehäuse 1 ist ein Pumpenlager 2 angeordnet in welchem die Antriebswelle 3 der Kühlmittelpumpe axial und radial gelagert ist.

Auf dem freien, das Lagergehäuse 1 überragenden Ende der Antriebswelle 3 ist eine Riemenscheibe 4 angeordnet.

Das andere freie Ende der Antriebswelle 3, die Kupplungswelle 5, ist als Keilwelle ausgebildet.

Auf dieser Kupplungswelle 5 ist ein um bis ca. 10 mm axial verschiebbares Aufnahmestück 6 angeordnet, in dem sich eine zentrisch mit Keilprofil versehene Buchse befindet.

Auf dem am Aufnahmestück 6 angeordneten Bund befindet sich ein kraftschlüssig mit dem Aufnahmestück versehener wälzgelagerter Stellring 7 in dem eine Rillennut 8 angeordnet ist. in diese Rillennut 8 greift ein schwenkbar, mittels eines im Kühlmittelpumpengehäuse befestigten Bolzens, gelagerter Betätigungshebel 9 ein. Dieser Betätigungshebel 9 ragt durch eine im Kühlmittelpumpengehäuse angeordnete Öffnung in eine Verstelleinheit 10 hinein. Mittels des Betätigungshebels 9 kann nun die Lage des Aufnahmestückes 6 durch einen in der Verstelleinheit 10 angeordneten Stellmotor oder aber auch mittels eines dort angeordneten Hubmagneten stufenlos variiert werden.

Auf der dem Strömungsraum der Pumpe zugewandten Seite des Aufnahmestückes 6 ist ein Scheibenverbund bestehend aus einer Hysteresescheibe 18 und einer starr mit dieser verbundenen Kupferscheibe 19 angeordnet.

Dieser Scheibenverbund ist beispielsweise mittels Gießharz kraftschlüssig mit dem Aufnahmestück 6 verbunden. Zentrisch an der Kupplungswelle 5 ist zwischen dieser und einem Deckel 13 ein Axiallager 12 ( beispielsweise ein Druckring ) angeordnet.

Diese innerhalb des Lagergehäuses angeordneten Baugruppen sind durch den Deckel 13, mittels eines im Lagergehäuse 1 angeordneten Dichtringes 14 flüssigkeitsdicht vom Strömungsraum abgetrennt.

Mittig im Deckel 13 ist eine Lageraufnahmebuchse eingeformt die in den inneren, kreisförmigen Freiraum des Scheibenverbundes hineinragt und die an dem an der Kupplungswelle angeordneten Axiallager 12 anliegt.

Der Deckel 13 selbst besteht beispielsweise aus einem nichtmagnetischen Material wie Aluminium, Phenolharzmasse oder ähnlichem ( u.a. Nirosta ( CrNi)) von etwa 0,5 bis 1 mm Stärke. Bei maximal in Richtung des Strömungsraumes axial verschobenem Aufnahmestück 6 ist die Stirnseite des scheibenförmigen Hysteresescheibe 18 etwa mindestens 0,5 mm von der benachbarte kreisringförmige Deckelfläche beabstandet. In der Lageraufnahmebuchse ist auf der dem Strömungsraum zugewandten Seite ein Gleitlagerbuchse 15 aus Siliziumcarbit eingebracht.

In dieser Gleitlagerbuchse 15 ist ein auf einer Insertbuchse 16 angeordneter Gleitring 17 gelagert.

An der anderen Seite des Anlagebundes des Gleitringes 17 liegt eine mehrpolig sektorenförmig magnetisierter Magnetscheibe 11 an.

Die Stirnseite der Magnetscheibe 11 ist mindestens 0,5 mm von der benachbarte kreisringförmige Deckelfläche beabstandet.

Der Anlagebund des Gleitringes 17 dient neben der Übertragung der axialen und radialen Lagerkraft gleichzeitig der exakten Festlegung dieses definierten Luftspaltes zwischen der Magnetscheibe 11 und der Wandung des Deckels 13 von etwa 0,5 mm bis ca. 1 mm.

Unmittelbar an der dem Deckel abgewandten Seite der Magnetscheibe 11 ist auf der Insertbuchse 16 eine Weicheisenscheibe 20 angeordnet. Dieser wiederum ist das ebenfalls auf der Insertbuchse 16 angeordnete beispielsweise aus Plastwerkstoff bestehende Flügelrad 21 benachbart.

Die im Betriebszustand der Pumpe relativ umlaufenden Segmente der Magnetscheibe 11 erzeugen in der Kupferscheibe 19 Spannungen, die Wirbelströme zur Folge haben. Die vor der Kupferscheibe 19 angeordnete Hysteresescheibe 18 ( AlNiCo ) dient dem magnetischen Rückschluß und verstärkt so das von diesen Wirbelströmen in der Kupferscheibe 19 aufgebaute Magnetfeld.

Mit zunehmender Relativdrehzahl steigt die Stärke der Wirbelströme und somit auch die Größe des übertragbaren Drehmomentes an.

Auf Grund der erfindungsgemäßen Anordnung des scheibenförmigen Magnetringes im Kühlmittel kann die bei steigender Relativdrehzahl zunehmende Erwärmung desselben durch das diesen umströmende Kühlmittel minimiert werden.

Durch die stetigen Kühlung des scheibenförmigen Magnetringes wird eine nahezu schlupfleistungsunabhängige Drehmomentenübertragung, d. h. eine gleichmäßige Fördermenge trotz hoher Schlupfleistung realisiert und daher ein relativ hohes maximal übertragbares Drehmoment und demzufolge eine optimale Fördermenge der Kühlmittelpumpe gewährleistet.

Da nach dem Stillstand des Motors das Magnetfeld erhalten bleibt und der Luftspalt bei Stillstand des Motors auf "minimal" eingestellt wird, wird auch in diesem Zustand mittels der erfindungsgemäßen Lösung stets die Lagesicherung der Insertbuchse 16 mit den daran angeordneten Baugruppen gewährleistet.

Das zwischen Deckel 13 und Kupplungswelle 5 angeordnete Axiallager 12 dient der Vermeidung von unkontrollierten Spaltänderungen und verhindert so gleichzeitig unkontrollierte Drehzahländerungen oder gar das Anlaufen des Hysteresescheibe 18 an den Deckel 13.

Daher wird mit der erfindungsgemäßen Lösung selbst bei hoher Leistungsübertragung stets die Zuverlässigkeit der Pumpe gewährleistet.

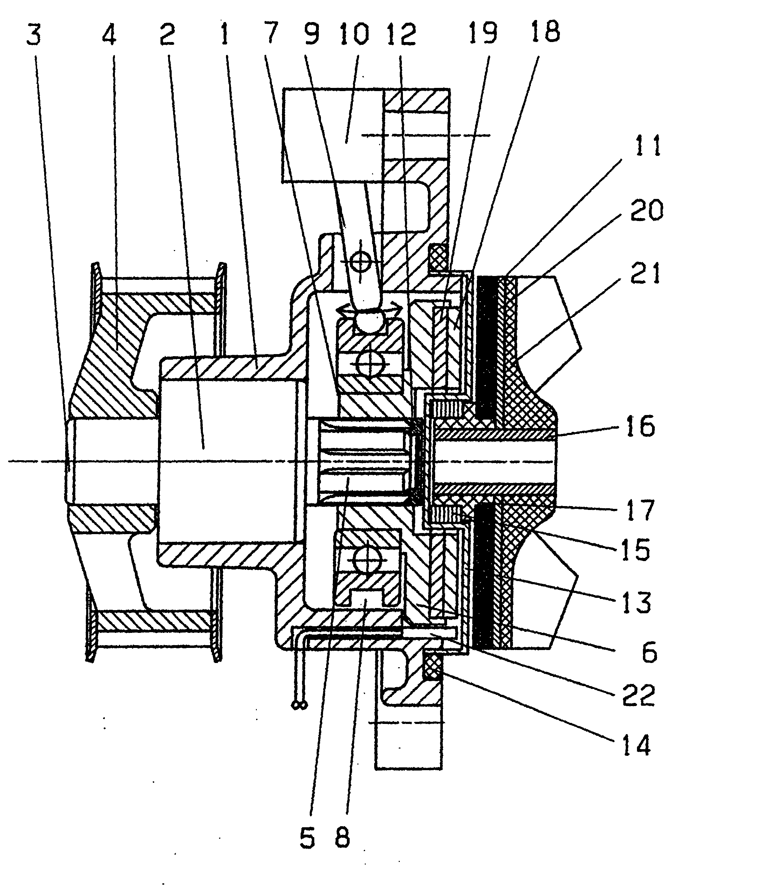

Selbstverständlich könnten die beiden Hälften der in Figur 1 dargestellten dauermagnetischen Kupplung, einerseits der Scheibenverbund bestehend aus Magnetscheibe 11 und Weicheisenscheibe 20 und andererseits der Scheibenverbund bestehend aus einer Hysteresescheibe 18 und einer Kupferscheibe 19, auch gegeneinander vertauscht auf den jeweils beidseitig des Deckels 13 gegenüberliegenden Bauelementen der Pumpe angeordnet sein.

Am Lagergehäuse 1 ist darüber hinaus ein Sensor 22 zur Erfassung der jeweiligen Drehzahl des Flügelrades 21 angeordnet.

Auf Grund dieser Erfassung der Drehzahl des Flügelrades 21 ist es über die Mototronik des Verbrennungsmotors in Verbindung mit der Regelbarkeit der erfindungsgemäßen Kühlmittelpumpe möglich mittels der Verstelleinheit 10 das axial verschiebbare Aufnahmestück 6 derart in seiner Lage und somit kontinuierlich den Luftspalt zwischen den beiden Kupplungshälften zu verändern, so daß dieser sich verändernde Luftspalt eine Veränderung des Übertragungsmomentes der Kupplung und demzufolge eine Veränderung der Flügelraddrehzahl zur Folge hat.

Somit kann die Förderleistung der Pumpe stets den jeweiligen motorseitigen Erfordernissen angepaßt werden, so daß dem Antriebssystem für den Kühlmittelpumpenantrieb im gesamten Arbeitsbereich des Motors stets nur so viel Leistung entnommen wird wie das Gesamtsystem zur Kühlung benötigt.

Auf Grund der erfindungsgemäßen Lösung kann auch mittels der Motortronik erstmals bei permanent sich ändernden Motordrehzahl ein konstant bleibender Volumenstrom des Kühlmittels mittels einer über eine Riemenscheibe direkt angetriebenen Kühlmittelpumpe realisiert werden.

Daher ist es auf Grund dieser erfindungsgemäßen Lösung möglich regelbare Kühlmittelpumpen für Kraftfahrzeuge bereitzustellen, welche direkt von der Kurbelwelle des Verbrennungsmotors angetrieben werden, keine Wellendichtung zur Abdichtung des Strömungsraumes gegenüber dem Lagergehäuse der Antriebsriemenscheibe benötigen, sich stets durch eine hohe Betriebssicherheit und Zuverlässigkeit bei minimalem Fertigungs- und Montageaufwand auszeichnen und insbesondere im gesamten Arbeitsbereich des Motors sowohl die Abgasemission wie auch den Kraftstoffverbrauch deutlich reduzieren.

### Bezugszeichenzusammenstellung

- 1: Lagergehäuse
- 2: Pumpenlager
- 3: Antriebswelle
- 4: Riemenscheibe
- 5: Kupplungswelle
- 6: Aufnahmestück
- 7: Stellring
- 8: Rillennut
- 9: Betätigungshebel
- 10: Verstelleinheit
- 11: Magnetscheibe
- 12: Axiallager
- 13: Deckel
- 14: Dichtring
- 15: Gleitlagerbuchse
- 16: Insertbuchse
- 17: Gleitring
- 18: Hysteresescheibe
- 19: Kupferscheibe
- 20: Weicheisenscheibe
- 21: Flügelrad
- 22: Sensor

## Patentansprüche

1. Regelbare Kühlmittelpumpe für Kraftfahrzeuge, welche über eine Riemenscheibe (4) direkt vom Verbrennungsmotor angetrieben wird, wobei auf einer mit der Riemenscheibe (4) verbundenen Kupplungswelle (5) eine erste Kupplungshälfte und davon beabstandet und mittels einer nichtmagnetischen Trennwand flüssigkeitsdicht von der ersten Kupplungshälfte getrennt eine mit einem Flügelrad (21) verbundene zweite Kupplungshälfte einer Magnetkupplung angeordnet ist, wobei auf einer der Kupplungshälften ein oder mehrere mehrpolig sektorenförmig magnetisierte Magnet/e angeordnet sind, und die erste Kupplungshälfte mittels einer Verstelleinheit (10) axial verschiebbar auf der Kupplungswelle (5) angeordnet ist, so daß die Spaltweite des zwischen den Kupplungshälften angeordneten Luftspaltes in Abhängigkeit vom Betriebszustand des Verbrennungsmotors variiert werden kann, **dadurch gekennzeichnet, daß** auf der der mit sektorenförmig magnetisierten Magneten versehenen Kupplungshälfte gegenüberliegenden Kupplungshälfte Hysteresewerkstoff mit ein- oder beidseitig benachbartem Kupfermaterial angeordnet ist.

2. Pumpe nach Anspruch 1, **dadurch gekennzeichnet, daß** am Lagergehäuse (1) ein Sensor (22) zur Erfassung der jeweiligen Drehzahl des Flügelrades (21) angeordnet ist.

3. Pumpe nach Anspruch 1 oder den Ansprüchen 1 und 2, **dadurch gekennzeichnet, daß** die beiden einander gegenüberliegenden, voneinander beabstandet angeordneten, wirksamen Kupplungsoberflächen der dauermagnetischen Kupplung in ihrer Oberflächenformen zueinander komplementär, in den unterschiedlich möglichen Bauformen der Kupplung als beliebige rotationssymmetrische Körper, beispielsweise als Paraboloid, Kegelmantel, Zylindermantel oder aber auch in der Form einer Kreisscheibe, wie aber auch als Kombinationen der möglichen vorgenannten Oberflächenformen ausgebildet sind.

4. Pumpe, nach einem oder mehreren der Ansprüche 1 bis 3, **dadurch gekennzeichnet, daß** die vorzugsweise als Deckel (13) ausgebildete nichtmagnetischen Trennwand mittels eines Axiallagers (12) gegen die Antriebswelle (3) abgestützt ist.

5. Pumpe nach einem oder mehreren der Ansprüche 1 bis 4, **dadurch gekennzeichnet, daß** in oder an der vorzugsweise als Deckel (13) ausgebildeten nichtmagnetischen Trennwand, ein Lagerzapfen mit Anlaufbund angeordnet ist, auf dem das mittels einer Gleitlagerbuchse (15) drehbar gelagerte Flügelrad (21) mit den zugehörigen Kupplungsbaugruppen gegen axiale Verschiebungen gesichert ist, wobei im Bereich des freien Endes des Lagerzapfens ein Sicherungsring angeordnet ist und sich zwischen diesem Sicherungsring und dem Flügelrad (21) eine Anlaufscheibe befindet.

6. Pumpe nach einem oder mehreren der Ansprüche 1 bis 5, **dadurch gekennzeichnet, daß** in der nichtmagnetischen Trennwand, dem Deckel (13), eine Gleitlagerbuchse (15) angeordnet ist, in welcher das Gegenlager mit dem Flügelrad (21) und den jeweils zugehörigen Kupplungsbaugruppen axial und radial gelagert ist.

7. Pumpe nach einem oder mehreren der Ansprüche 1 bis 6, **dadurch gekennzeichnet, daß** nahe der nichtmagnetischen Trennwand am drehbar gelagerten Flügelrad mit den an diesem angeordneten zugehörigen Kupplungsbaugruppen ein der Kupplungswelle (5) der Antriebsseite gegenüberliegender Axialmagnet angeordnet ist.

8. Pumpe nach einem oder mehreren der Ansprüche 1 bis 7, **dadurch gekennzeichnet, daß** sich im Bereich der mit der Antriebswelle (3) verbundenen Kupplungshälfte ein ebenfalls mit der Antriebswelle (3) verbundenes Lüfterrad befindet.

9. Pumpe nach einem oder mehreren der Ansprüche 1 bis 8, **dadurch gekennzeichnet, daß** an der axial verschiebbaren Kupplungshälfte beispielsweise ein wälzgelagerter Stellring (7) angeordnet ist, an dem ein in eine Verstelleinheit (10) hineinragender, schwenkbar im Kühlmittelpumpengehäuse gelagerter Betätigungshebel (9) angreift.

10. Pumpe nach einem oder mehreren der Ansprüche 1 bis 9, **dadurch gekennzeichnet, daß** auf der Kupplungswelle (5) zwischen dem Anlagebund für das Pumpenlager (2) und der mit dem wälzgelagerten Stellring (7) verbundenen axial verschiebbaren Kupplungshälfte eine vorgespannte Druckfeder angeordnet ist.

## Claims

1. Adjustable coolant pump for motor vehicles, which is driven directly by the internal combustion engine via a pulley (4); whereby, on a clutch shaft (4) connected with the pulley (4), there is a first coupling half and, at some distance from it, and separated from the first coupling half by means of a leak-proof non-magnetic separating wall, there is a second coupling half of a magnetic clutch connected to an impeller wheel (21); there is/are one or more magnet(s) arranged on one of the coupling halves, magnetized in a multi-pole, sector-shaped manner, and the first coupling half is arranged by means of an adjusting unit (10) axially movably on the clutch shaft (5), so that the gap width of the air gap between the coupling halves can be varied depending on the operational status of the internal combustion engine, **characterized by** the fact that on the coupling half that is opposite to the one equipped with the sector-shape magnetized magnets, there is a hysteresis material with copper material on one or both sides.

2. Pump according to claim 1, **characterized by** the fact that on the bearing housing (1), there is a sensor arranged for recording the relevant rotational speed of the impeller wheel (21).

3. Pump according to claim 1 or claims 1 and 2, **characterized by** the fact that the two effective coupling surfaces of the permanent magnetic coupling, which are situated opposite one another at a distance from one another, are complementary to each other in their surface shapes, in the various different shapes of the coupling that are possible as any desired rotation-symmetric bodies, e.g. as a paraboloid, envelope of cone, or in the form of a flat circular disk, or also as a combination of the possible aforementioned surface forms.

4. Pump in accordance with one or more of the claims 1 to 3, **characterized by** the fact that the non-magnetic separating wall, which is preferably formed as the cover (13) is braced by means of a thrust bearing (12) against the drive shaft (3).

5. Pump, according to one or more claims 1 to 4, **characterized by** the fact that in or on the non-magnetic separating wall, which is preferably formed as the cover (13), there is a bearing journal with a resting shoulder, on which the impeller wheel (21) that is rotatably supported by means of a plain bearing bush (15) is secured against axial displacements with the relevant clutch assemblies; there is a securing ring arranged in the area of the free end of the bearing journal and there is a buffer disc located between this securing ring and the impeller wheel (21).

6. Pump, according to one or more of the claims 1 to 5, **characterized by** the fact that in the non-magnetic separating wall, the cover (13), there is a plain bearing bush (15) arranged, in which the thrust bearing with the impeller wheel (21) and the respective relevant coupling assemblies are supported axially and radially.

7. Pump according to one or more of the claims 1 to 6, **characterized by** the fact that near the non-magnetic separating wall on the rotatably supported impeller wheel, with the relevant clutch assembly situated on it, there is an axial magnet located opposite the clutch shaft (5) of the drive side.

8. Pump according to one or more of the claims 1 to 7, **characterized by** the fact that there is an impeller wheel located in the area of the coupling half that is connected to the drive shaft (3); this impeller wheel is also connected to the drive shaft (3).

9. Pump according to one or more of the claims 1 to 8, **characterized by** the fact that there is e.g. a roller-bearing supported adjusting ring (7) located on the axially movable coupling half, which is engaged by an operating lever (9) that projects into an adjusting unit (10), and is swivel-supported in the coolant pump housing.

10. Pump according to one or more of the claims 1 to 9, **characterized by** the fact that there is a pre-stressed compression spring located on the clutch shaft (5) between the resting shoulder for the pump bearing (2) and the axially movable coupling half that is connected to the roller bearing-supported adjusting ring (7).

## Revendications

1. Pompe de refroidissement régulable pour véhicules qui est entraînée directement par une poulie à courroie (4) depuis le moteur à combustion bien que sur l'un des arbre d'accouplement (5) raccordé avec la poulie de courroie (4), une première moitié d'accouplement et, éloigné de celle-ci et séparée au moyen d'une paroi de séparation non magnétique, de manière étanche aux liquides par rapport à la première moitiè d'accouplement, une seconde moitié de l'accouplement d'un accouplement magnétique est ordonnancée de manière raccordée à une roue à ailettes (21) quoiqu'un ou des aimants magnétiques multipolaires en forme de quartiers sont ordonnancés sur l'une des deux moitiés de l'accouplement et que la première moitié de l'accouplement est ordonnancée de manière axiallement glissable sur l'arbre d'accouplement (5) au moyen d'une unité de réglage (10) de telle manière que la largeur de l'écart de cet écart réalisé entre les moitiés d'accouplement peut varier en rapport avec l'état de service du moteur à combustion, **caractérisée** en cela que la moitié d'accouplement dotée d'aimants magnétisés en forme de quartiers est montée à l'opposée de la moitié d'accouplement à matériau créant l'hystérésis avec du matériau similaire au cuivre sur un ou des deux côtés.

2. Le pompe selon la revendication 1 est **caractérisée** en cela par le fait que sur le carter de roulements (1), un capteur (22) est ordonnancé pour la saisie de la vitesse de rotation de la roue à ailettes (21).

3. La pompe selon la revendication 1 ou les revendications 1 et 2 est **caractérisée** en cela par le fait que les deux surfaces actives se trouvent l'une devant l'autre, ordonnées de manière écartée l'une par rapport à l'autre, de l'accouplement en permanence magnétique, complémentaires l'un par rapport à l'autre sur leur formes de surfaces, par le fait que les formes de construction différentes possibles comme corps quelconques symétriques en rotation sont formés, par exemple, comme paraboloïde, manteau de cônique, manteau cylindrique ou également sous forme d'un disque circulaire comme également en guise de combinaison des formes possibles déjà citées.

4. La pompe selon une ou plusieurs des revendications 1 à 3 est **caractérisée** en cela par le fait que la paroi de séparation, formée de préférence comme couvercle (13) non magnétique est soutenue au moyen d'un guidage axial (12) contre l'arbre d'entraînement (3).

5. La pompe selon une ou plusieurs des revendications 1 à 4 est **caractérisée** en cela par le fait que dans ou sur la paroi de séparation formée de préférence comme couvercle (13) non magnétique, un tourtillon est ordonnancé avec un embout de démarrage sur lequel une roue à ailettes (21) guidée sur un manchon de guidage (15) avec les modules d'accouplement y appartenant est assurée contre les décalages axiaux bien qu'une bague de sécurité est ordonnancée dans le secteur de l'embout libre du tourtillon et se trouve entre cette bague de sécurité et la roue à ailettes (21) d'un disque de démarrage.

6. La pompe selon une ou plusieurs des revendications 1 à 5 est **caractérisée** en cela par le fait que dans la paroi de séparation non magnétique du couvercle (13), un manchon de guidage est ordonnancé, dans lequel le contre-guidage est guidé avec une roue à ailettes (21) et les modules axiaux et radiaux d'accouplement concernés.

7. La pompe selon une ou plusieurs des revendications 1 à 6 est **caractérisée** en cela par le fait qu'à proximité de la paroi de séparation à la roue à ailettes guidée, un des arbres d'accouplement (5) d'un aimant se trouvant à l'opposé du côté de l'entraînement est ordonnacé avec l'un des modules d'accouplement appartenant à cette roue à ailettes.

8. La pompe selon une ou plusieurs des revendications 1 à 7 est **caractérisée** en cela par le fait que dans le secteur de la moitié de l'accouplement raccordé avec un arbre d'entraînement (3) se trouve une roue à ailettes également raccordée avec l'arbre d'entraînement (3).

9. La pompe selon une ou plusieurs des revendications 1 à 8 est **caractérisée** en cela par le fait qu'une bague de positionnement (7) sur roulement à rouleaux est, par exemple, disposée sur la moitié de l'accouplement axialement décalable, sur lequel un levier de commande (9) guidé pivotant dans un carter de pompe de produit de refroidissement s'imbrique dans une unité de réglage (10) pivotant.

10. La pompe selon une ou plusieurs des revendications 1 à 9 est **caractérisée** en cela par le fait qu'un ressort de pression précontraint est disposé sur l'arbre d'accouplement (5), entre l'embout de l'installation pour le roulement de la pompe (2) et la moitié de l'accouplement axialement déplaçable raccordé avec la bague de positionnement (7) guidée sur rouleaux.
